# FASCICULE DE BREVET EUROPEEN

(11) **EP 2 769 120 B1**
(45) Date de publication et mention de la délivrance du brevet: **13.07.2016**
(21) Numéro de dépôt: 12787767.8
(22) Date de dépôt: 16.10.2012
(51) Int. Cl.: F16G 5/08

(54) **COURROIE TRAPEZOÏDALE DE TRANSMISSION COMPORTANT UN COUSSIN PERIPHERIQUE ELASTIQUEMENT DEFORMABLE**
TRAPEZFÖRMIGER TREIBRIEMEN MIT EINEM ELASTISCH VERFORMBAREN PERIPHEREN KISSEN
TRAPEZOIDAL TRANSMISSION BELT COMPRISING AN ELASTICALLY-DEFORMABLE PERIPHERAL CUSHION

(30) Priorité: 18.10.2011 FR 1159391
(43) Date de publication de la demande: 27.08.2014
(73) Titulaire: Colmant Cuvelier SA, 59000 Lille (FR)
(72) Inventeur: SALMON, Patrick, F-62840 Laventie (FR)
(74) Mandataire: Zimmermann, Alain
(86) Numéro de dépôt international: PCT/FR2012/052352
(87) Numéro de publication internationale: WO 2013/057417

(56) Documents cités:
- US-A- 3 090 716
- US-A- 3 964 329
- US-A- 4 096 764

## Description

La présente invention concerne une courroie fermée de transmission de forme trapézoïdale.

Il existe actuellement de nombreux types de courroies de transmission de forme trapézoïdale destinées à être montrées sur des poulies.

Un exemple de courroie trapézoïdale comporte notamment un coeur en élastomère en forme de trapèze, une couche transversale de renfort liée au coeur pour éviter sa déformation, un ou plusieurs câble(s), par exemple en matériau inextensible, noyé dans la structure (notamment le coeur) et une couche d'enrobage en tissu enduit entourant de manière périphérique cet ensemble sur toute la longueur de la courroie.

De plus, les documents US3964329 et US4096764 divulguent les courroies de transmission selon de l'état de technique.

Cependant, ces solutions ne donnent pas entièrement satisfaction. En effet, lorsque le(s) câble(s) sont inextensible(s), il est difficile de réaliser toute une série de courroies ayant exactement les mêmes dimensions. Or, pour certaines applications, il est nécessaire de pouvoir allonger légèrement une ou plusieurs courroies pour la/les mettre à la même longueur que d'autres, par exemple dans un système d'entraînement à multiples courroies parallèles ayant un écartement identique, ou pour compenser un différentiel d'écartement entre les axes des poulies portant deux ou plusieurs courroies parallèles.

Un but de la présente invention est donc de résoudre les problèmes cités précédemment, à l'aide d'une solution simple à fabriquer, facile à utiliser et optimisée en termes d'efficacité.

Ainsi, la présente invention a pour objet une Courroie fermée de transmission de forme trapézoïdale comportant :
- un noyau principal en forme de trapèze réalisé en caoutchouc naturel et/ou synthétique, renfermant au moins un câble sensiblement inextensible s'étendant sur toute la longueur de ladite courroie,
- au moins une couche en élastomère renforcé de fibres, disposée au contact du noyau, proche de la grande base du trapèze, et
- au moins une fine couche d'enrobage extérieur à base de tissu enveloppant latéralement l'intégralité du noyau et de la couche renforcée sur toute la longueur de la courroie,
caractérisée en ce qu'elle comporte en outre un coussin périphérique de gomme réalisé dans un matériau élastomère élastiquement plus tendre et déformable que celui constituant le noyau, ledit coussin de gomme entourant le noyau et la couche en élastomère renforcé de fibres sur toute la longueur de la courroie et étant entouré par la couche d'enrobage.

Selon des modes de réalisation préférés, la courroie conforme à la présente invention comprend l'une au moins des caractéristiques suivantes :
- autre fine couche d'enrobage intérieur sensiblement similaire à la couche d'enrobage précédente entoure la couche en élastomère renforcé de fibres et le noyau et en étant au contact direct avec ceux-ci de sorte que le coussin est disposé entre les deux couches d'enrobage ;
- les deux couches d'enrobage se referment chacune autour du noyau et/ou du coussin et de la couche en élastomère renforcé de fibres, respectivement sur la grande base et sur la petite base, ou inversement ;
- une couche d'enrobage se referme sur la grande base par chevauchement de ses extrémités libres tandis que l'autre couche d'enrobage se referme sur la petite base par chevauchement de ses extrémités libres ;
- une autre couche en élastomère renforcé de fibres est disposée à l'opposée de la couche renforcée précédente et plus proche de la grande base, de sorte que les deux couches en élastomère renforcé de fibres sont disposées de part et d'autre de chaque câble ;
- chaque câble est enrobé dans une couche de liaison ;
- la courroie comprend plusieurs câbles parallèles, en particulier environ 2 à 10 et de préférence 6 à 8 ;
- le coussin présente une épaisseur constante comprise entre environ 0,1 mm et 1,5 mm, par exemple de quelques dixièmes de mm ;
- le coussin est réalisé en élastomère à base de caoutchouc naturel et de caoutchouc synthétique SBR et présente une dureté Shore A comprise entre environ 45 et 65, de préférence entre 54 et 58 ; et
- chaque couche d'enrobage est en coton enduit de gomme à base de chloroprène.

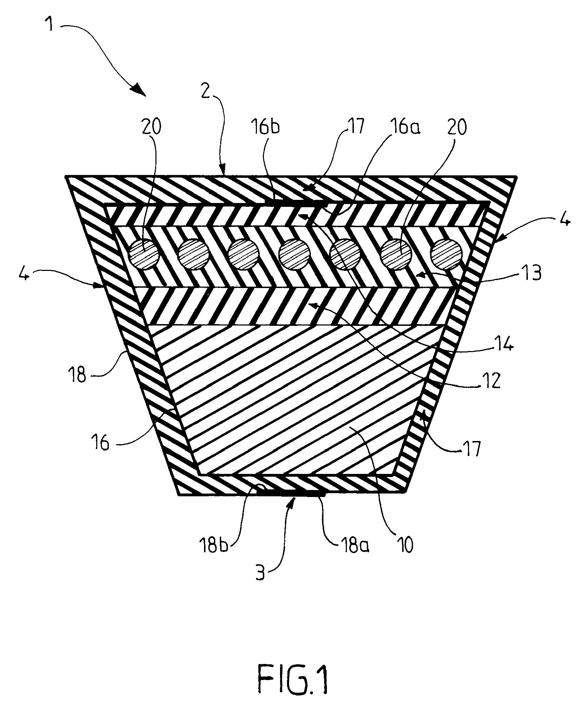

L'invention va maintenant être décrite plus en détail en référence à un mode de réalisation particuliers donné à titre d'illustration uniquement et représentés sur al figure 1 en annexe.

Ainsi, la figure 1 représente une courroie 1 de transmission destinée à être montée en tension sur deux poulies, une première poulie de transmission, par exemple reliée à l'arbre d'entrée d'un moteur d'entraînement, et une seconde poulie réceptrice à laquelle la force rotative d'entraînement est transmise pour entraîner un arbre de sortie.

Cette courroie 1 présente une section trapézoïdale avec une grande base 2, une petite base 3 parallèlement opposée à la grande base, et deux flancs 4 qui sont destinés à reposer sur des flancs correspondants de la poulie de transmission et de la poulie réceptrice. A ce propos, de manière usuelle, l'entraînement est effectué par contact/adhérence entre les flancs 4 de la courroie et les flancs des poulies, sans contact entre le fond de gorge des poulies et la petite base 3 de la courroie 1.

Comme cela est visible, la courroie 1 comporte plusieurs couches reliées les unes aux autres, notamment à chaud par vulcanisation.

En premier lieu, la courroie 1 comporte un noyau central 10 en élastomère constitué d'un mélange de caoutchouc naturel et de caoutchouc synthétique (SBR) et possédant une dureté shore A d'environ 70 à 80, par exemple 75-76.

Ce noyau 10 présente, au-dessus de lui en direction de la grande base 2, une couche 12 en élastomère renforcé comportant des fibres synthétiques pour présenter une bonne rigidité transversale et éviter la déformation de la courroie 1. L'épaisseur de cette couche renforcée 12 peut varier entre environ 1 et 6 mm, par exemple de l'ordre de 2 à 3 mm. La dureté Shore A de la couche renforcée 12 est comprise entre environ 70 et 100, par exemple de l'ordre de 85 à 90.

Au-dessus de cette première couche renforcée 12, toujours en direction de la grande base 2, se trouve une couche de liaison 13 en élastomère à base de caoutchouc naturel possédant une mémoire élastique. Cette couche de liaison 13 possède une épaisseur variant entre environ 0,2 et 3 mm, par exemple 0,4 à 2,4 mm, et une dureté Shore A comprise entre environ 50 et 70, par exemple de l'ordre de 60 à 64.

Dans cette couche de liaison 13 est noyée une série de câbles inextensibles parallèles 20 à base d'aramide, par exemple en Kevlar (marque déposée). Ces câbles parallèles 20 font le tour de la courroie 1 et permettent notamment de transmettre mécaniquement la force de rotation de la première poulie de transmission à la seconde poulie réceptrice.

Une autre couche 14 en élastomère renforcé de fibres synthétiques identique à la couche précédente 12 (en termes de matière et dureté notamment) est également jointe à la couche de liaison 13, au-dessus de cette dernière en direction de la grande base 2, de sorte que la couche de liaison 13 se trouve prise en sandwich entre les deux couches renforcées 12 et 14. Il en découle que les câbles 20, noyés dans la couche de liaison 13, sont également disposés entre les deux couches renforcées 12 et 14. Ces deux couches de renfort 12 et 14 permettent notamment d'éviter une déformation de la courroie 1 et en particulier des câbles 20 (par pontage) car la tension produite par les poulies peut être particulièrement importante et provoquer des contraintes élevées. Cette couche renforcée 14 mesure typiquement environ 0,5 à 2 mm d'épaisseur, par exemple 1 à 1,4 mm.

L'ensemble constitué par le noyau 10, les deux couches de renfort 12 et 14, la couche de liaison 13 et les câbles 20 est entouré par une couche d'enrobage 16 constituée de tissu, par exemple à base de coton enduit de chlororoprène. Cette couche d'enrobage 16 s'étend sur toute la circonférence de la courroie et forme une sorte de premier emballage périphérique dont les extrémités 16a et 16b sont rabattues l'une sur l'autre longitudinalement pour se chevaucher afin d'être liées l'une à l'autre. Dans le mode de réalisation représenté, la couche d'enrobage 16 se referme par jonction (en particulier à chaud) au niveau de la plus grande base 2 de la courroie 1, par exemple proche de son milieu.

Une couche 17 formant coussin déformable, réalisée en élastomère plus souple que celui constituant notamment le noyau 10, entoure l'intégralité de la première couche d'enrobage 16 (et de ce fait le noyau 10, les couches renforcées 12 et 14, les câbles 20 et la couche de liaison 13).

Ce coussin 17 possède une élasticité supérieure à celle du noyau 10, des couches de renfort 12 et 14 et éventuellement de la couche de liaison 13. A titre d'exemple, l'élastomère constituant le coussin 17 peut posséder une dureté Shore A comprise entre environ 45 et 65, par exemple de l'ordre de 54 à 58. Le coussin 17 présente par ailleurs un coefficient d'allongement à la rupture supérieur de 50 à 80% à celui du noyau 10. Selon le mode de réalisation représenté, l'épaisseur du coussin 17 est d'environ 0,1 à 1,5 mm, typiquement de l'ordre de quelques dixièmes de mm selon l'élasticité requise (elle-même fonction du matériau choisi et de ses caractéristiques physico-chimiques).

Une autre couche d'enrobage 18, réalisée dans la même matière que la précédente couche d'enrobage 16 et possédant les mêmes caractéristiques physico-chimiques, entoure de manière périphérique l'intégralité du coussin 17 sur route la longueur de la courroie 1. Les extrémités 18a et 18b de cette couche d'enrobage 18 se rabattent l'une sur l'autre et se chevauchent longitudinalement pour former une jonction (à chaud) disposée sur la petite base 3 de la courroie 1, sensiblement en son milieu.

Ainsi, le coussin 17 est intégralement pris en sandwich entre les deux couches d'enrobage 16 et 18.

Le choix de disposer le chevauchement des deux couches d'enrobage 16 et 18 en opposition sur les deux bases du trapèze permet un meilleur équilibrage de la courroie 1 et évite les surépaisseurs locales de tissu provoquant une raideur (dans le cas où les chevauchements de liaison des extrémités 16a, 16b, 18a et 18b seraient situés au même endroit).

Ce coussin 17 ayant une bonne élasticité et un bon coefficient d'allongement, il permet à la courroie 1, une fois tendue et placée autour des poulies de transmission et réceptrice, de se déformer par écrasement sensiblement perpendiculairement à la surface des flancs 4.

On rappelle que les câbles 20 ne sont pas extensibles mais qu'ils servent à transmettre la force induite par la poulie de transmission. Ainsi, pour pouvoir faire varier légèrement la circonférence de la courroie 1 (c'est-à-dire sa longueur), il est impossible de jouer sur une quelconque élasticité de ces câbles 20.

Il convient donc de jouer sur l'élasticité des matériaux souples constituant la courroie 1, et en particulier sur l'élasticité d'une couche qui n'est pas en contact et/ou ne renferme pas les câbles 20.

C'est donc le rôle du coussin périphérique 17 qui, en s'écrasant de quelques centième ou dixième de mm au niveau des flancs 4 de la courroie, permet à cette dernière d'être sensiblement plus longue.

Ainsi, il n'est plus indispensable de fournir des courroies strictement identiques à un client qui souhaite en placer plusieurs en parallèles sur des poulies présentant des écartements identiques. En effet, bien souvent, quant un lot de courroies est fourni pour ce type d'application, certaines d'entres elles vont être légèrement plus courtes et d'autres légèrement plus longues. Comme elles renferment chacune des câbles inextensibles, il est fort probable que certaines courroies soient plus tendues que d'autres, ce qui peut nuire au fonctionnement du système. Grâce à la présence du coussin déformable élastiquement 17, une sorte de jeu de rattrapage est crée par écrasement de sorte que les courroies un peu plus courtes peuvent s'étendre légèrement pour atteindre la longueur des autres. Ainsi, le système à multiple courroies parallèles peu fonctionner efficacement et il est inutile de fournir des courroies strictement identiques (calibrées).

Dans une autre application, dans le cas où l'utilisateur possède deux courroies exactement identiques, si deux paires de poulies parallèles ne possèdent pas exactement le même écartement, il est possible de compenser ce différentiel car le coussin élastiquement déformable de la courroie montée sur les poulies les plus proches pourra se déformer de manière à allonger la courroie.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, les matériaux en élastomère constituant les différentes parties peuvent varier, de même que le matériau inextensible formant les câbles.

## Revendications

1. Courroie (1) fermée de transmission de forme trapézoïdale comportant :
- un noyau principal (10) en forme de trapèze réalisé en caoutchouc naturel et/ou synthétique, renfermant au moins un câble (20) s'étendant sur toute la longueur de ladite courroie (1),
- au moins une couche (14) en élastomère disposée au contact du noyau (10), proche de la grande base (2) du trapèze,
- au moins une fine couche d'enrobage extérieur (18), et
- un coussin périphérique de gomme (17) réalisé dans un matériau élastomère élastiquement plus tendre et déformable que celui constituant le noyau (10), ledit coussin de gomme (17) entourant le noyau (10) et la couche en élastomère sur toute la longueur de la courroie (1) et étant entouré par la couche d'enrobage (18),
**caractérisée en ce que** la couche en élastomère (14) est renforcée de fibres et la fine couche d'enrobage extérieur (18) est à base de tissu et enveloppe latéralement l'intégralité du noyau (10) et de la couche renforcée (14) sur toute la longueur de la courroie (1).

2. Courroie (1) selon la revendication 1, **caractérisée en ce qu'**une autre fine couche d'enrobage intérieur (16) sensiblement similaire à la couche d'enrobage précédente (18) entoure la couche en élastomère renforcé de fibres (14) et le noyau (10) et en étant au contact direct avec ceux-ci de sorte que le coussin (17) est disposé entre les deux couches d'enrobage (16, 18).

3. Courroie (1) selon la revendication 2, **caractérisée en ce que** les deux couches d'enrobage (16, 18) se referment chacune autour du noyau (10) et/ou du coussin (17) et de la couche en élastomère renforcé de fibres (14), respectivement sur la grande base (2) et sur la petite base (3), ou inversement.

4. Courroie selon la revendication 3, **caractérisée en ce qu'**une couche d'enrobage (16) se referme sur la grande base (2) par chevauchement de ses extrémités libres (16a, 16b) tandis que l'autre couche d'enrobage (18) se referme sur la petite base (3) par chevauchement de ses extrémités libres (18a, 18b).

5. Courroie selon l'une quelconque des revendications précédentes, **caractérisée en ce qu'**une autre couche (12) en élastomère renforcé de fibres est disposée à l'opposée de la couche renforcée précédente (14) et plus proche de la grande base (2), de sorte que les deux couches en élastomère renforcé de fibres (12, 14) sont disposées de part et d'autre de chaque câble (20).

6. Courroie selon l'une quelconque des revendications précédentes, **caractérisée en ce que** chaque câble (20) est inextensible et est enrobé dans une couche de liaison (13).

7. Courroie selon l'une quelconque des revendications précédentes, **caractérisée en ce qu'**elle comprend plusieurs câbles parallèles (20), en particulier environ 2 à 10 et de préférence 6 à 8.

8. Courroie selon l'une quelconque des revendications précédentes, **caractérisée en ce que** le coussin (17) présente une épaisseur constante comprise entre environ 0,1 mm et 1,5 mm, par exemple de quelques dixièmes de mm.

9. Courroie selon l'une quelconque des revendications précédentes, **caractérisée en ce que** le coussin est réalisé en élastomère à base de caoutchouc naturel et de caoutchouc synthétique SBR et présente une dureté Shore A comprise entre environ 45 et 65, de préférence entre 54 et 58.

10. Courroie selon l'une quelconque des revendications précédentes, **caractérisée en ce que** chaque couche d'enrobage (16, 18) est en coton enduit de gomme à base de chloroprène.

## Patentansprüche

1. Trapezförmiger geschlossener Treibriemen (1), umfassend:
- einen trapezförmigen Hauptkern (10), welcher aus Natur- und/oder Synthesekautschuk gebildet ist, der mindestens ein Kabel (20) umschließt, das sich über die gesamte Länge des Riemens (1) erstreckt,
- mindestens eine Schicht (14) aus Elastomer, die in Kontakt mit dem Kern (10) nahe bei der großen Basis (2) des Trapezes angeordnet ist,
- mindestens eine feine äußere Überzugsschicht (18), und
- ein peripheres Gummikissen (17), das in einem elastomeren Material gebildet ist, welches elastisch nachgiebiger und verformbarer ist als jenes, aus dem der Kern (10) besteht, wobei das Gummikissen (17) den Kern (10) und die Schicht aus Elastomer über die gesamte Länge des Riemens (1) umgibt und von der Überzugsschicht (18) umgehen ist,
**dadurch gekennzeichnet, dass** die Schicht aus Elastomer (14) mit Fasern verstärkt ist und die feine äußere Überzugsschicht (18) auf Gewebe basiert und lateral die Gesamtheit des Kerns (10) und der verstärkten Schicht (14) über die gesamte Länge des Riemens (1) umhüllt.

2. Riemen (1) nach Anspruch 1, **dadurch gekennzeichnet, dass** eine andere feine innere Überzugsschicht (16) im Wesentlichen ähnlich der vorhergehenden Überzugsschicht (18) die Schicht aus mit Fasern verstärktem Elastomer (14) und den Kern (10) umgibt und in direktem Kontakt mit diesen steht, so dass das Kissen (17) zwischen den beiden Überzugsschichten (16, 18) angeordnet ist.

3. Riemen (1) nach Anspruch 2, **dadurch gekennzeichnet, dass** sich die beiden Überzugsschichten (16, 18) jeweils rund um den Kern (10) und/oder das Kissen (17) und die Schicht aus mit Fasern verstärktem Elastomer (14) jeweils über der großen Basis (2) und über der kleinen Basis (3) oder umgekehrt schließen.

4. Riemen nach Anspruch 3, **dadurch gekennzeichnet, dass** sich eine Überzugsschicht (16) über der großen Basis (2) durch Überlappung ihrer freien Enden (16a, 16b) schließt, während sich die andere Überzugsschicht (18) über der kleinen Basis (3) durch Überlappung ihrer freien Enden (18a, 18b) schließt.

5. Riemen nach einem der vorhergehenden Ansprüche, **dadurch gekennzeichnet, dass** eine andere Schicht (12) aus mit Fasern verstärktem Elastomer gegenüber der vorhergehenden verstärkten Schicht (14) und näher bei der großen Basis (2) angeordnet ist, so dass die beiden Schichten aus mit Fasern verstärktem Elastomer (12, 14) auf beiden Seiten jedes Kabels (20) angeordnet sind.

6. Riemen nach einem der vorhergehenden Ansprüche, **dadurch gekennzeichnet, dass** jedes Kabel (20) undehnbar ist und mit einer Verbindungsschicht (13) umhüllt ist.

7. Riemen nach einem der vorhergehenden Ansprüche, **dadurch gekennzeichnet, dass** er mehrere parallele Kabel (20) umfasst, insbesondere etwa 2 bis 10 und vorzugsweise 6 bis 8.

8. Riemen nach einem der vorhergehenden Ansprüche, **dadurch gekennzeichnet, dass** das Kissen (17) eine konstante Dicke zwischen etwa 0,1 mm und 1,5 mm, beispielsweise von einigen Zehntel mm, aufweist.

9. Riemen nach einem der vorhergehenden Ansprüche, **dadurch gekennzeichnet, dass** das Kissen aus Elastomer auf der Basis von Naturkautschuk und Synthesekautschuk SBR gebildet ist und eine Shore A-Härte zwischen etwa 45 und 65, vorzugsweise zwischen 54 und 58, aufweist.

10. Riemen nach einem der vorhergehenden Ansprüche, **dadurch gekennzeichnet, dass** jede Überzugsschicht (16, 18) aus Baumwolle überzogen mit Gummi auf der Basis von Chloropren besteht.

## Claims

1. Trapezoidal endless transmission belt (1) comprising:
- a main core (10) in the shape of a trapezium made from natural and/or synthetic rubber, inclosing at least one cord (20) extending over the entire length of said belt (1),
- at least one elastomer layer (14) disposed in contact with the core (10), close to the large base (2) of the trapezium,
- at least one thin external coating layer (18), and
- a peripheral rubber cushion (17) made from an elastomeric material which is elastically softer and more deformable than that forming the core (10), said rubber cushion (17) surrounding the core (10) and the elastomer layer over the entire length of the belt (1) and being surrounded by the coating layer (18),
**characterised in that** the elastomer layer (14) is reinforced with fibres and the thin external coating layer (18) is based on fabric and laterally envelops the entirety of the core (10) and of the reinforced layer (14) over the entire length of the belt (1),

2. Belt (1) as claimed in claim 1, **characterised in that** another thin interval coating layer (16) substantially similar to the preceding coating layer (18) surrounds the fibre-reinforced elastomer layer (14) and the core (10) and being in direct contact with both so that the cushion (17) is disposed between the two coating layers (16, 18).

3. Belt (1) as claimed in claim 2, **characterised in that** the two coating layers (16, 18) each close around the core (10) and/or the cushion (17) and the fibre-reinforced elastomer layer (14), respectively on the large base (2) and on the small base (3), or vice versa.

4. Belt as claimed in claim 3, **characterised in that** a coating layer (16) closes over the large base (2) by overlapping its free ends (16a, 16b), whereas the other coating layer (18) closes over the small base (3) by overlapping its free ends (18a, 18b).

5. Belt as claimed in any one of the preceding claims, **characterised in that** another fibrereinforced elastomer layer (12) is disposed opposite the preceeding reinforced layer (14) and closer to the large base (2) so that the two fibre-reinforced elastomer layers (12, 14) are disposed on each side of each cord (20).

6. Belt as claimed in any one of the preceding claims, **characterised in that** each cord (20) is non-extendible and is coated in a bonding layer (13).

7. Belt as claimed in any one of the preceding claims, **characterised in that** it comprises a plurality of parallel cords (20), in particular about 2 to 10 and preferably 6 to 8.

8. Belt as claimed in any of the preceding claims, **characterised in that** the cushion (17) has a constant thickness of between about 0.1 mm and 1.5 mm, e.g. of some tenths of mm.

9. Belt as claimed in any of the preceding claims, **characterised in that** the cushion is made of an elastomer based on natural rubber and synthetic rubber SBR and has a Shore A hardness of between about 45 and 65, preferably between 54 and 58.

10. Belt as claimed in any of the preceding claims, **characterised in that** each coating layer (16, 18) is made of cotton coated with a chloroprene-based rubber.
